Europäisches Patentamt

(19) European Patent Office

Office européen des brevets

(11) Publication number: **0 244 210**
**B1**

(12) EUROPEAN PATENT SPECIFICATION

(45) Date of publication of the patent specification:
08.11.89

(21) Application number: **87303776.6**

(22) Date of filing: **28.04.87**

(51) Int. Cl.⁴: **B29C 47/88**

(54) Conveying apparatus and method.

(30) Priority: **29.04.86  GB 8610410**

(43) Date of publication of application:
**04.11.87 Bulletin 87/45**

(45) Publication of the grant of the patent:
**08.11.89 Bulletin 89/45**

(84) Designated Contracting States:
**AT BE CH DE ES FR GR IT LI LU NL SE**

(56) References cited:
**US-A- 898 775**
**US-A- 2 527 455**
**US-A- 3 776 672**
**US-A- 3 860 379**
**US-A- 4 054 148**

(73) Proprietor: **SILENT CHANNEL PRODUCTS LIMITED,**
**Ferrars Road, Huntingdon Cambridgeshire**
**PE18 7HN(GB)**

(72) Inventor: **Drew, Raymond Thomas, 4 Grange Gardens,**
**Llantwit Major South Glamorgan CF6 9XB(GB)**

(74) Representative: **Jones, Michael Raymond et al,**
**HASELTINE LAKE & CO. Hazlitt House 28 Southampton**
**Buildings Chancery Lane, London WC2A 1AT(GB)**

## Description

This invention relates to a method of conveying and heating an extrudate on a moving cushion of gas, and is more particularly, although not exclusively, concerned with a method of conveying and heat-treating (for instance, to cure) a synthetic extrudate using a hot air cushion conveyor means.

In a conventional system for the manufacture of extruded weatherstrips for motor vehicles, the formed extrudate emerges from the extruder die at a relatively high temperature (approximately 160°C) and is then subjected to a curing or drying process in an oven; the extrudate is conveyed through the oven by a conventional belt conveyor. In this technique, the external surface of the extrudate necessarily rests on the belt of the conveyor. As the surface of the extrudate will be hot and soft, the surface may become marked by this contact with the belt of the conveyor. Should the part of the surface which becomes marked be an area of the extrudate which will be visible when the strip is in position on a motor vehicle, the aesthetic appearance of the vehicle will be decreased somewhat. This so-called "sight face "marking of an extrudate is a continuing and serious problem in the production of extruded weatherstrips for motor vehicles.

US 3 776 672 discloses an extrusion apparatus for making embossed polyvinyl chloride siding. After embossing, the siding extrudate is cooled in an air cooling zone which comprises three upper and lower plenum chambers for air distribution. Each plenum chamber is provided with an air inlet and with air distributing discharge slots for spreading the cooling air over the surfaces of the siding.

According to a first aspect of the present invention, there is provided a method of conveying and heat-treating an extrudate, which method comprises: introducing the extrudate to be conveyed and heat-treated onto a cushion of gas created by the provision of a series of spaced-apart outlets (10, 11), each outlet (10, 11) being fed by pressurised hot air from a plenum chamber, said gas being at or above a predetermined temperature; causing the extrudate to be conveyed on the cushion of gas; and removing the conveyed and heat-treated extrudate from the cushion of gas; wherein a proportion of the outlets (10) are perpendicular to the direction of travel of an extrudate through the conveyor means (1), thereby to provide lift to the extrudate and the remainder of the outlets (11) are inclined with a component in the direction of travel thereby to provide both thrust in the direction of travel and lift to the extrudate.

According to a second aspect of the present invention, there is provided a method of conveying and curing an extrudate, which method comprises: providing an elongate conveyor means (1) which includes, along at least a portion of its length, a plurality of spaced apart outlets (10, 11) through which air or other gas at or above a temperature sufficient to cure, set or otherwise dry the extrudate is passed under pressure thereby to create, above the outlets (10, 11), a cushion of moving air or other gas; introducing the extrudate to be conveyed and cured onto an upstream region of the cushion of moving air or other gas; permitting the extrudate to be conveyed on the cushion of moving air or other gas and to be cured by the air or other gas; and removing the cured extrudate from the conveyor means; wherein a proportion of the outlets (10) are perpendicular to the direction of travel of an extrudate through the conveyor means (1), thereby to provide lift to the extrudate and the remainder of the outlets (11) are inclined with a component in the direction of travel thereby to provide both thrust in the direction of travel and lift to the extrudate.

According to a third aspect of the present invention, there is provided an apparatus for manufacturing a heat-treated extrudate comprising:

(i) an extruder which includes an outlet from which an untreated extrudate is extruded; and
(ii) combined conveying and heat-treating means for conveying and heat-treating the untreated extrudate, said conveying and heat-treating means comprising:

an elongate conveyor means (1) communicating with the outlet of the extruder and including, along at least a portion of its length, a plurality of spacedapart outlets (10, 11) through which a gas at or above a predetermined temperature may be passed under pressure thereby to create a cushion of moving gas to convey and heat-treat the extrudate; means for providing said gas at the predetermined temperature for heat-treating said extrudate, which provision means communicates with the outlets of the conveyor means; and means, situated at an upstream region of the conveyor means, for introducing the extrudate onto the cushion of moving gas; wherein a proportion of the outlets (10) are perpendicular to the direction of travel of an extrudate through the conveyor means (1), thereby to provide lift to the extrudate and the remainder of the outlets (11) are inclined with a component in the direction of travel thereby to provide both thrust in the direction of travel and lift to the extrudate.

According to a fourth aspect of the present invention, there is provided an apparatus for manufacturing a heat-treated extrudate comprising:

(i) an extruder which includes an outlet from which the untreated extrudate is extruded; and
(ii) combined conveying and curing means for conveying and curing the untreated extrudate,

said combined conveying and heat-treating means comprising:
a conveyor means (1) communicating with the outlet of the extruder and defining an elongate insulated chamber opening into which is a plurality of outlets (10, 11) through which air or other gas at or above a temperature sufficient to cure, set or otherwise dry the extrudate any be passed under pressure to create a cushion of moving gas in the chamber to convey the extrudate from a first region of the conveyor means to a second, downstream region of the conveyor means;

heater means for providing said hot air or other gas, the heater means communicating with the nozzles of the conveyor means; and means, situated at the upstream end of the conveyor means, for introducing the extrudate onto the cushion of moving hot air or other gas;

wherein a proportion of the outlets (10) are perpendicular to the direction of travel of an extrudate through the conveyor means (1), thereby to provide lift to the extrudate and the remainder of the outlets (11) are inclined with a component in the direction of travel thereby to provide both thrust in the direction of travel and lift to the extrudate.

Heat treatment of the untreated extrudate renders the soft extrudate resistant to deformation, The heat treatment may cure the extrudate by physical modification, may cause the extrudate to set or may simply dry the extrudate.

The method and apparatus of the present invention enable an extruate, to be transported and simultaneously cured without causing "sight face " marking of the extrudate since the extrudate is supported by a cushion of a heated gas, preferably hot air, during its curing stage.

The predetermined temperature of the gas may be sufficient to cure, set or otherwise dry the extrudate.

Preferably, the gas will be air at a temperature above 100°C, more preferably above 200°C.

Hereinafter, references to "air" should not be limited to air but should be construed as covering alternative gases.

Although each outlet or nozzle may be fed from the same chamber, it may be advantageous to feed each individual nozzle, or a series of nozzles, from a separate chamber so that the air pressure at each nozzle or set of nozzles can be individually adjusted.

To this end, flow regulators may be positioned in the lines feeding the separate chambers.

The nozzles may be independently controllable, for example by a microprocessor, in order accurately to hold the extrudate in a particular disposition. In addition, other stations may be provided to treat the extrudate before it has been removed from the chamber.

For example, flocking may be applied even as the extrudate is being cured.

It is envisaged that the whole arrangement could be controlled by microprocessors. Thus, sensors, adapted to sense the position and orientation of the extrudate could be disposed in the chamber to yield signals to control a microprocessor which then adjusts the nozzles in order to alter the disposition of the extrudate. Temperature sensors to monitor and to be used in the adjustment of the temperature of the hot air could also be provided.

There are, therefore, a number of variables which can be altered to control the movement of the extrudate through the conveyor means. Thus, the air flow, air pressure, and pattern and size of the nozzles may be varied to give differing degrees of lift and thrust and varying speeds of transportation through the conveyor means.

The cushion of air is preferably enclosed within an insulated chamber by a roof.

The top of the plenum chamber, in which the nozzles may be seated, may be shaped so as to guide the product in the correct orientation through the conveyor means. Thus, by the provision of, for examples, grooves in the top of the plenum chamber, an air flow may be created which assists in guiding and orientating the product.

The hot air, once it has passed through the system, is collected and re-circulated back to the input side of the system.

To maintain an even and constant temperature inside the chamber or tunnel, regardless of the flow of air through the nozzles, a variable quantity of hot air may be re-directed to by-pass the chamber or chambers supplying the nozzles and, instead, to flow through the tunnel with the extrudate. The quantity, pressure and temperature of the by-pass air can be manually or automatically varied as required.

For a better understanding of the present invention and to show how it may be carried into effect, reference will now be made, by way of example, to the accompanying drawings in which :

Figure 1 shows a schematic view of a conveying/heating means useful in the apparatus of the present invention; and

Figure 2 shows a cross-section on the line II-II of Figure 1.

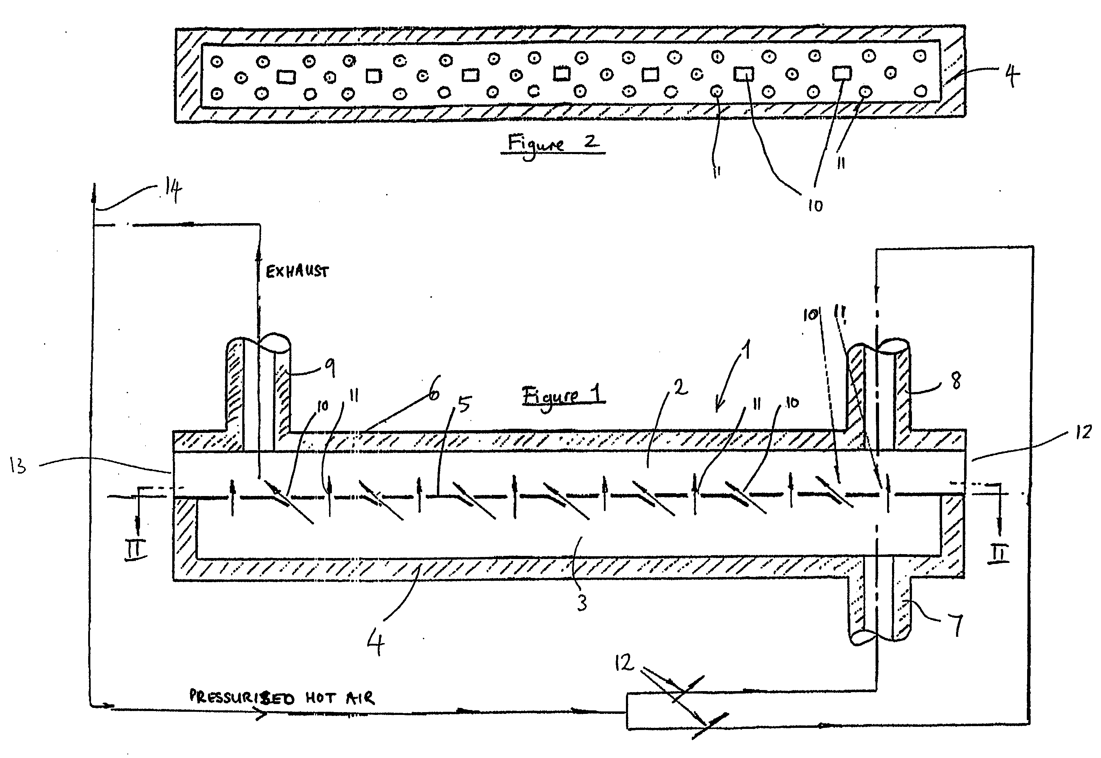

In Figure 1 an enclosed conveyor 1 is sub-divided into an upper chamber or tunnel 2 and a lower or plenum chamber 3. The plenum chamber 3 is defined by an insulated base portion 4 and a roof 5. The lower part of the tunnel 2 is defined by the roof 5 of the plenum chamber 3 and an upper part by an insulated cover 6. The upstream end 12 of the conveyor communicates with the outlet of an extruding machine (not shown).

The base portion 4 of the plenum chamber is provided with an inlet 7 through which hot pressurised air is introduced into the plenum chamber 3. The tunnel 2 is provided with an inlet 8 for pressurised hot air to be introduced into the tunnel 2 and an outlet 9 through which exhaust air is removed from the tunnel 2.

The plenum chamber 3 is, in the illustrated embodiment, a single chamber communicating with a plurality of outlets or nozzles 10, 11. However, the single plenum chamber 3 may be sub-divided into a number of separate plenum chambers each having a pressurised hot air supply and each having its own set of nozzles. The pressurised hot air is delivered through the nozzles 10, 11 to provide a cushion of hot air on which an extrudate is transported from one end 12 of the tunnel to the other end 13 of the tunnel.

The nozzles 10, 11 are of two separate types, namely, firstly, a nozzle 11 which is perpendicular to the direction of travel of an extrudate through the tunnel 2 and, secondly, a nozzle 10 which is angled with respect to the direction of travel of an extrudate through the tunnel 2. The perpendicular nozzle 11 provides lift whereas the angled nozzle 10 provides both lift and thrust in a particular direction, as indicated by the arrows. The individual nozzles 10, 11 may be controlled so as to adjust the rate of air flow through the nozzles and hence the degree of lift and thrust to an extrudate moving through the tunnel 2. The nozzles may be controlled by a microprocessor (not shown) which is, in turn, controlled by signals from one or more sensing means (not shown) which sense the disposition of an extrudate in the tunnel 2.

Pressurised hot air for the plenum chamber 3 is delivered through the inlet 7. In addition, pressurised hot air is delivered through the inlet 8 in the tunnel to maintain an even and constant temperature inside the tunnel, regardless of the flow of hot air through the nozzles. The relative rates of flow through the inlet 7, 8 may be controlled by flow regulators 12. Exhaust hot air is removed from the tunnel via the exhaust outlet 9. The exhaust hot air may be collected and recirculated back to the input side of the system. In addition, fumes may be vented from the exhaust as indicated by reference numeral 14.

The hot air, in addition to providing lift to support an extrudate moving through the tunnel also serves to cure, dry or otherwise heat-treat the extrudate. The apparatus avoids the necessity for the extrudate to make contact with the conveyor and hence avoids the formation of "sight face" marking on critical areas of the extrudate.

In Figure 2, the disposition of nozzles fed from the plenum chamber is shown. The square nozzles 10 are angled to provide lift and thrust whilst the round nozzles 11 provide lift. In one embodiment (not illustrated) of the present invention, a single square nozzle 10 and a block of five adjacent round nozzles 11 may be fed from a single plenum chamber although it is to be appreciated that any pattern of nozzles could be fed from a single plenum chamber.

Although it has been mentioned above that an extrudate is pushed through the conveyor means on the cushion of air, it is to be appreciated that the article to be conveyed and heated could be pulled or wound on the cushion of air through the tunnel.

**Claims**

1. A method of conveying and heat-treating an extrudate, which method comprises: introducing the extrudate to be conveyed and heat-treated onto a cushion of gas created by a series of spaced-apart outlets each fed by pressurised hot gas from a plenum chamber, said gas being at or above a predetermined temperature; causing the extrudate to be conveyed on the cushion of gas; and removing the conveyed and heattreated article from the cushion of gas; wherein a proportion of the outlets are perpendicular to the direction of travel of an extrudate through the conveyor means, thereby to provide lift to the extrudate, and the remainder of the outlets are inclined with a component in the direction of travel, thereby to provide both thrust in the direction of travel and lift to the extrudate.

2. A method of conveying and curing an extrudate, which method comprises: providing an elongate conveyor means which includes, along at least a portion of its length, a plurality of spaced apart outlets through which air or other gas at or above a predetermined temperature sufficient to cure, set or otherwise dry the extrudate is passed under pressure thereby to create, above the outlets, a cushion of moving air or other gas; introducing the extrudate to be conveyed and cured onto an upstream region of the cushion of moving air or other gas; permitting the extrudate to be conveyed on the cushion of moving air or other gas and to be cured by the air or other gas; and removing the cured extrudate from the conveyor means; wherein a proportion of the outlets are perpendicular to the direction of travel of an extrudate through the conveyor means, thereby to provide lift to the extrudate, and the remainder of the outlets are inclined with a component in the direction of travel, thereby to provide both thrust in the direction of travel and lift to the extrudate.

3. A method according to Claim 1 or 2, wherein the predetermined temperature of the gas is sufficient to cure, set or otherwise dry the extrudate.

4. A method according to Claim 3, wherein the predetermined temperature is 100°C.

5. A method according to Claim 3, wherein the predetermined temperature is 200°C.

6. A method according to any preceding claim, wherein the gas is air.

7. A method according to Claim 6, wherein each individual outlet, or series of outlets, is fed from a separate chamber such that the air pressure at each outlet, or set of outlets, can be individually adjusted.

8. A method according to any preceding claim, wherein the volume and pressure of the gas fed to the outlets is independently controllable by a microprocessor means.

9. An apparatus for manufacturing a heat-treated extrudate comprising:
(i) an extruder which includes an outlet from which an untreated extrudate is extruded; and
(ii) conveying and heat-treating means for conveying and heating the untreated extrudate, said conveying and heat-treating means comprising:
an elongate conveyor means communicating with the outlet of the extruder and including, along at least a portion of its length, a plurality of spaced-apart outlets through which a gas at or above a predetermined temperature may be passed under pressure thereby to create a cushion of moving gas to convey and heat-treat the extrudate;
means for providing said gas at the predetermined temperature for heat-treating said extrudate, which provision means communicates with the outlets of the conveyor means; and means, situated at an upstream region of the conveyor means, for introducing the extrudate onto the cushion of moving gas;
wherein a proportion of the outlets are perpendicular to the direction of travel of an extrudate through the conveyor means, thereby to provide lift to the extrudate, and the remainder of the outlets are inclined with a component in the direction of travel, thereby to provide both thrust in the direction of travel and lift to the extrudate.

10. An apparatus for manufacturing a heat-treated extrudate comprising:

(i) an extruder which includes an outlet from which the untreated extrudate is extruded; and

(ii) conveying and curing means for conveying and curing the untreated extrudate, said combined conveying and heat-treating means comprising:

a conveyor means communicating with the outlet of the extruder and defining an elongate insulated chamber opening into which is a plurality of nozzles through which hot air or other gas at or above a temperature sufficient to cure, set or otherwise dry the extrudate may be passed under pressure to create a cushion of moving gas in the chamber to convey the extrudate from a first region of the conveyor means to a second, downstream region of the conveyor means;

heater means for providing said hot air or other gas, the heater means communicating with the nozzles of the conveyor means; and means, situated at the upstream end of the conveyor means, for introducing the extrudate onto the cushion of moving hot air or other gas;

wherein a proportion of the nozzles are perpendicular to the direction of travel of an extrudate through the conveyor means, thereby to provide lift to the extrudate, and the remainder of the nozzles are inclined with a component in the direction of travel thereby to provide both thrust in the direction of travel and lift to the extrudate.

11. An apparatus according to Claim 10, wherein each individual nozzle, or series of nozzles, is fed by pressurised hot air from a separate chamber such that the air pressure at the nozzle, or series of nozzles, can be individually adjusted.

12. An apparatus according to claim 10 or 11, further including a microprocessor means for independently controlling the volume and pressure of gas fed to each outlet or nozzle.

## Patentansprüche

1. Verfahren zum Befördern und Wärmebehandeln eines Extrudates, mit folgenden Schritten: Einlegen des zu befördernden und wärmezubehandelnden Extrudates auf ein Gaskissen, welches durch eine Reihe von im Abstand angeordneten Auslässen (10, 11) gebildet wird, die jeweils mit heißem Druckgas aus einer Vorkammer gespeist werden, wobei dieses Gas eine vorbestimmte Temperatur aufweist oder überschreitet, Befördern des Extrudates auf dem Gaskissen, und Entnehmen des beförderten und wärmebehandelten Extrudates von dem Gaskissen, wobei einige der Auslässe senkrecht zu der Förderrichtung des Extrudates durch die Beförderungseinrichtung angeordnet sind, um das Extrudat anzuheben, und die restlichen Auslässe mit einer Komponente in Förderrichtung geneigt angeordnet sind, um dadurch das Extrudat sowohl mit Schub in Förderrichtung zu beaufschlagen als auch anzuheben.

2. Verfahren zum Befördern und Aushärten eines Extrudates mit folgenden Schritten: Zurverfügungstellen einer langgestreckten Beförderungseinrichtung, die zumindest entlang eines Teils ihrer Länge eine Vielzahl von im Abstand voneinander angeordneten Auslässen aufweist, durch welche Luft oder ein anderes Gas mit einer vorbestimmten Temperatur oder mit einer über einer vorbestimmten Temperatur liegenden Temperatur, die ausreicht, um das Extrudat auszuhärten, zu festigen oder sonstwie zu trocknen, unter Druck hindurchströmt, um oberhalb der Auslässe ein Kissen von sich bewegender Luft oder sich bewegendem Gas zu erzeugen; Einlegen des zu befördernden und zu härtenden Extrudates auf einen stromaufwärts befindlichen Bereich des Kissens von sich bewegender Luft oder sich bewegendem Gas, um es zu befördern und auszuhärten, Zulassen, daß das Extrudat auf dem Kissen von sich bewegender Luft oder sich bewegendem Gas befördert und ausgehärtet wird, und Entfernen des ausgehärteten Etrudates aus der Beförderungseinrichtung, wobei einige der Auslässe senkrecht zu der Förderrichtung des Extrudates durch die Beförderungseinrichtung angeordnet sind, um das Extrudat anzuheben, und die restlichen Auslässe mit einer Komponente in Förderrichtung geneigt angeordnet sind, um dadurch das Extrudat sowohl mit Schub in Förderrichtung zu beaufschlagen als auch anzuheben.

3. Verfahren nach Anspruch 1 oder 2, wobei die vorbestimmte Gastemperatur aus reicht, um das Werkstück auszuhärten, zu festigen oder sonstwie zu trocknen.

4. Verfahren nach Anspruch 3, wobei die vorbestimmte Gastemperatur 100°C beträgt.

5. Verfahren nach Anspruch 3, wobei die vorbestimmte Gastemperatur 200°C beträgt.

6. Verfahren nach einem der Ansprüche 1 bis 5, wobei das Gas Luft ist.

7. Verfahren nach Anspruch 6, wobei jeder einzelne Auslaß oder jede Reihe von Auslässen von einer gesonderten Druckkammer derart gespeist wird, daß der Luftdruck an jedem Auslaß oder jeder Reihe von Auslässen individuell eingestellt werden kann.

8. Verfahren nach einem der vorhergehenden Ansprüche, wobei das Volumen und der Druck des Gases, welches in die Auslässe eingespeist wird, durch einen Mikroprozessor unabhängig voneinander steuerbar bzw. regelbar sind.

9. Vorrichtung zur Herstellung eines wärmebehandelten Extrudates mit:

(i) einem Extruder, welcher einen Ausgang aufweist, aus dem ein unbehandeltes Extrudat ausgestoßen wird, und

(ii) einer Beförderungs- und Wärmebehandlungseinrichtung zur Beförderung und Wärembehandlung des unbehandelten Extrudates mit:

einer langgestreckten Beförderungseinrichtung, welche mit dem Ausgang des Extruders verbunden ist und welche, zumindest entlang eines Teils ihrer Länge, eine Anzahl von im Abstand befindlichen Auslässen aufweist, durch die ein Gas mit einer vorbestimmten Temperatur oder mit einer Temperatur, welche oberhalb der vorbestimmten Temperatur liegt, unter Druck hindurchströmen kann, um dadurch ein Kissen von sich bewegendem Gas zum Transport und zur Wärmebehandlung des Extrudates zu erzeugen, Mitteln zum Liefern des genannten Gases mit einer vorbestimmten Temperatur für die Wärmebehandlung des genannten Extrudates, die mit den Auslässen der Beförderungseinrichtung verbunden sind, und Mitteln zum Einlegen des Extrudates auf das Kissen von sich bewegendem Gas, welche in einem stromaufwärts befindlichen Bereich der Beförderungseinrichtung angeordnet sind, wobei einige der Auslässe senkrecht zur Förderrichtung eines Extrudates durch die Beförderungseinrichtung angeordnet sind, um dadurch das Extrudat anzuheben, und die restlichen Auslässe mit einer Komponente in Förderrichtung geneigt angeordnet sind, um dadurch das Extrudat sowohl mit Schub in Förderrichtung zu beaufschlagen als auch anzuheben.

10. Vorrichtung zur Herstellung eines wärmebehandelten Extrudates mit:

(i) einem Extruder mit einem Ausgang, aus dem das unbehandelte Extrudat ausgestoßen wird, und

(ii) einer Beförderungs- und Aushärteinrichtung zum Befördern und Aushärten des unbehandelten Extrudates mit:

einer Beförderungseinrichtung, welche mit dem Ausgang des Extruders verbunden ist und welche eine langgestreckte isolierte Kammer bildet, in die eine Anzahl von Düsen mündet, durch die heiße Luft oder ein anderes Gas mit einer vorbestimmten Temperatur oder einer Temperatur, welche oberhalb der vorbestimmten Temperatur liegt, die ausreicht, um das Extrudat auszuhärten, zu festigen oder sonstwie zu trocknen, unter Druck hindurchströmen kann, um in der Kammer ein Kissen von sich bewegendem Gas zu erzeugen, um das Extrudat von einem ersten Bereich der Beförderungseinrichtung zu einem zweiten, stromabwärts gelegenen Bereich der Beförderungseinrichtung zu befördern, einer Heizeinrichtung zur Lieferung der genannten heißen Luft oder eines anderen Gases, die mit den Düsen der Beförderungseinrichtung verbunden ist, und Mitteln zum Einlegen des Extrudates auf ein Kissen aus sich bewegender heißer Luft oder einem anderen sich bewegenden heißen Gas, die an dem stromaufwärts befindlichen Ende der Beförderungseinrichtung angeordnet sind, wobei einige der Düsen senkrecht zu der Förderrichtung eines Extrudates angeordnet sind, um dadurch das Extrudat anzuheben, und die restlichen Düsen mit einer Komponente in Förderrichtung geneigt angeordnet sind, um dadurch das Extrudat sowohl mit Schub in Förderrichtung zu beaufschlagen als auch anzuheben.

11. Vorrichtung nach Anspruch 10, wobei jede einzelne Düse oder jede einzelne Reihe von Düsen von einer gesonderten Kammer mit heißer Druckluft versorgt wird, so daß der Luftdruck an den Düsen oder den Reihen von Düsen individuell eingestellt werden kann.

12. Vorrichtung nach Anspruch 10 oder 11, die zusätzlich einen Mikroprozessor zum unabhängigen Steuern bzw. Regeln von Volumen und Druck des Gases, welches in die Auslässe oder Düsen eingespeist wird, aufweist.

## Revendications

1. Procédé pour transporter et traiter thermiquement un produit d'extrusion, ce procédé comprenant: l'introduction du produit d'extrusion, destiné à être transporté et traité thermiquement, sur un coussin de gaz créé par une série de sorties espacées, alimentée chacune par un gaz chaud sous pression venant d'une chambre sous pression, ledit gaz étant à ou au-dessus d'une température prédéterminée; le transport du produit d'extrusion sur le coussin de gaz; et le retrait du produit transporté et traité thermiquement du coussin de gaz; dans lequel un certain nombre des sorties sont perpendiculaires à la direction du déplacement d'un produit d'extrusion par le moyen transporteur, ce qui assure un soulèvement du produit d'extrusion, et les sorties restantes sont inclinées avec une composante dans la direction du déplacement, ce qui communique ainsi au produit d'extrusion à la fois une poussée dans la direction du déplacement et un soulèvement.

2. Procédé pour transporter et cuire un produit d'extrusion, ce procédé comprenant: l'agencement d'un moyen transporteur allongé qui comprend, au moins sur une partie de sa longueur, une pluralité de sorties espacées par lesquelles de l'air ou un autre gaz à ou au-dessus d'une température prédéterminée, suffisante pour cuire, durcir ou sécher de toute autre manière le produit d'extrusion, passe sous pression pour créer ainsi, au-dessus des sorties, un coussin d'air ou d'un autre gaz en mouvement; l'introduction du produit d'extrusion destiné à être transporté et cuit sur une région d'amont du coussin d'air ou d'un autre gaz en mouvement; la possibilité pour le produit d'extrusion d'être transporté sur le coussin d'air ou d'un autre gaz en mouvement et d'être cuit par l'air ou l'autre gaz; et le retrait du produit d'extrusion cuit du moyen transporteur; dans lequel un certain nombre des sorties sont perpendiculaires à la direction du déplacement d'un produit d'extrusion par le moyen transporteur, ce qui communique au produit d'extrusion un soulèvement, et les sorties restantes sont inclinées avec une composante dans la direction du déplacement, ce qui soulève ainsi le produit d'extrusion et, à la fois, le pousse dans la direction du déplacement.

3. Procédé selon la revendication 1 ou 2, dans lequel la température prédéterminée du gaz est suffisante pour cuire, durcir ou sécher de toute autre manière le produit d'extrusion.

4. Procédé selon la revendication 3, dans lequel la température prédéterminée est de 100°C.

5. Procédé selon la revendication 3, dans lequel la température prédéterminée est de 200°C.

6. Procédé selon l'une quelconque des précédentes revendications, dans lequel le gaz est de l'air.

7. Procédé selon la revendication 6, dans lequel chaque sortie individuelle, ou série de sorties, est alimentée depuis une chambre séparée de sorte que la pression de l'air à chaque sortie, ou ensemble de sorties, peut être réglée individuellement.

8. Procédé selon l'une quelconque des précédentes revendications, dans lequel les volume et pression du gaz amené vers les sorties peuvent être commandés indépendamment par un microprocesseur.

9. Dispositif pour fabriquer un produit d'extrusion traité thermiquement comprenant:

(i) une extrudeuse qui comprend une sortie par laquelle un produit d'extrusion non traité est extrudé; et

(ii) des moyens de transport et de traitement thermique pour transporter et chauffer le produit d'extrusion non traité, lesdits moyens de transport et de traitement thermique comprenant:

un moyen transporteur allongé communiquant avec la sortie de l'extrudeuse et comprenant, au moins sur une partie de sa longueur, une pluralité de sorties espacées par lesquelles un gaz sous pression, à ou au-dessus d'une température prédéterminée, peut passer pour créer ainsi un coussin de gaz en mouvement pour transporter et traiter thermiquement le produit d'extrusion;

un moyen pour amener ledit gaz à la température prédéterminée pour traiter thermiquement ledit produit d'extrusion, ce moyen communiquant avec les sorties du moyen transporteur; et

un moyen, situé dans une région amont du moyen transporteur, pour introduire le produit d'extrusion sur le coussin de gaz en mouvement;

dans lequel un certain nombre des sorties sont perpendiculaires à la direction du déplacement d'un produit d'extrusion par le moyen transporteur, pour soulever ainsi le produit d'extrusion, et les sorties restantes sont inclinées avec une composante dans la direction du déplacement, pour soulever ainsi le produit d'extrusion et, à la fois, le pousser dans la direction du déplacement.

10. Dispositif pour fabriquer un produit d'extrucion traité thermiquement comprenant:

(i) une extrudeuse qui comprend une sortie par laquelle le produit d'extrusion non traité est extrudé; et

(ii) des moyens de transport et de cuisson pour transporter et cuire le produit d'extrusion non traité, lesdits moyens de transport et e traitement thermique combinés comprenant:

un moyen transporteur communiquant avec la sortie de l'extrudeuse et définissant une ouverture de chambre isolée, allongée, dans laquelle est située une pluralité de tuyéres par lesquelles de l'air ou un autre gaz chaud à ou au-dessus d'une température prédéterminée, suffisante pour cuire, durcir ou sécher de toute autre manière le produit d'extrusion, peut passer sous pression pour créer un coussin de gaz en mouvement dans la chambre pour transporter le produit d'extrusion depuis une première région du moyen transporteur vers une seconde région aval du moyen transporteur;

un moyen de chauffage pour fournir ledit air ou autre gaz chaud, le moyen de chauffage communiquant avec les tuyères du moyen transporteur; et

un moyen, situé à l'extrémité amont du moyen transporteur, pour introduire le produit d'extrusion sur le coussin d'air ou d'un autre gaz chaud en mouvement;

dans lequel un certain nombre des tuyères sont perpendiculaires à la direction du déplacement d'un produit d'extrusion par le moyen transporteur, pour soulever ainsi le produit d'extrusion, et les tuyères restantes sont inclinées avec une composante dans la direction du déplacement pour soulever ainsi le produit d'extrusion et, à la fois, le pousser dans la direction du déplacement.

11. Dispositif selon la revendication 10, dans lequel chaque tuyère individuelle, ou série de tuyères, est alimentée par de l'air chaud sous pression venant d'une chambre séparée de sorte que la pression de l'air au niveau de la tuyère, ou de la série de tuyères, peut être individuellement réglée.

12. Dispositif selon la revendication 10 ou 11, comprenant en outre un microprocesseur pour commander indépendamment les volume et pression du gaz amené vers chaque sortie ou tuyère.

Figure 2

Figure 1

EXHAUST

PRESSURISED HOT AIR

EP 0 244 210 B1